(19) Europäisches Patentamt
European Patent Office
Office européen des brevets

(11) **EP 3 602 201 B1**

(12) **FASCICULE DE BREVET EUROPEEN**

(45) Date de publication et mention de la délivrance du brevet:
**20.04.2022 Bulletin 2022/16**

(21) Numéro de dépôt: **18719064.0**

(22) Date de dépôt: **30.03.2018**

(51) Classification Internationale des Brevets (IPC):
**G03H 1/04** $^{(2006.01)}$

(52) Classification Coopérative des Brevets (CPC):
**G03H 1/0443; G03H 1/041;** G03H 1/0248;
G03H 2001/005; G03H 2001/0445; G03H 2210/12;
G03H 2222/45; G03H 2223/23

(86) Numéro de dépôt international:
**PCT/EP2018/058349**

(87) Numéro de publication internationale:
**WO 2018/178366 (04.10.2018 Gazette 2018/40)**

(54) **DISPOSITIFS ET METHODES D'IMAGERIE OPTIQUE PAR HOLOGRAPHIE NUMERIQUE HORS AXE**

VORRICHTUNGEN UND VERFAHREN ZUR OPTISCHEN BILDGEBUNG MITTELS DIGITALER HOLOGRAPHIE AUSSERHALB DER ACHSE

DEVICES AND METHODS FOR OPTICAL IMAGING BY MEANS OF OFF-AXIS DIGITAL HOLOGRAPHY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.03.2017 FR 1752775**

(43) Date de publication de la demande:
**05.02.2020 Bulletin 2020/06**

(73) Titulaires:
• **Centre National de la Recherche Scientifique**
  **75016 Paris (FR)**
• **Ecole Supérieure de Physique et de Chimie Industrielles de la Ville de Paris**
  **(ESPCI PARIS TECH)**
  **75002 Paris (FR)**

(72) Inventeurs:
• **ATLAN, Michael**
  **75019 Paris (FR)**

• **HUIGNARD, Jean-Pierre**
  **75013 Paris (FR)**

(74) Mandataire: **Osha Liang**
  **2, rue de la Paix**
  **75002 Paris (FR)**

(56) Documents cités:
**FR-A1- 2 997 518     US-A1- 2017 003 650**

• **LEITH E: "IMAGING THROUGH SCATTERING MEDIA WITH HOLOGRAPHY", JOURNAL OF THE OPTICAL SOCIETY OF AMERICA A, OPTICAL SOCIETY OF AMERICA, US, vol. 9, no. 7, 1 juillet 1992 (1992-07-01) , pages 1148-1153, XP000278656, ISSN: 1084-7529**

EP 3 602 201 B1

**Description**

**Domaine technique de l'invention**

La présente invention concerne des dispositifs et méthodes d'imagerie optique par holographie numérique hors axe et s'applique en particulier à l'imagerie microscopique, notamment des objets transparents ou réfléchissants.

**Etat de l'art**

La microscopie par contraste de phase s'est développée dès les années 1940 pour l'observation d'objets microscopiques transparents. En effet, dans les domaines de la biologie par exemple, la plupart des objets microscopiques, comme les cellules vivantes, sont transparents et ne diffèrent que très légèrement de leur entourage en terme d'absorption ou de couleur, ce qui résulte en de très petites variations de l'amplitude d'une onde lumineuse utilisée en microscopie conventionnelle. La microscopie par contraste de phase permet la détection de variations d'indice de réfraction au sein de l'objet afin d'en former une image. En particulier, les techniques interférométriques basées sur des interférences entre un faisceau lumineux transmis ou réfléchi par l'objet et un faisceau lumineux de référence, ont permis d'accéder à des mesures quantitatives de la distribution de la phase au sein des objets d'étude.

Plus précisément, la microscopie de phase par holographie numérique s'est révélée être une technique très puissante pour l'analyse quantitative des variations locales de l'indice de réfraction d'un objet transparent. En effet, l'holographie numérique qui comprend l'enregistrement digital d'un interférogramme par une caméra numérique et la reconstruction numérique d'hologrammes, donne accès simultanément à l'intensité et à la phase de l'onde qui se propage.

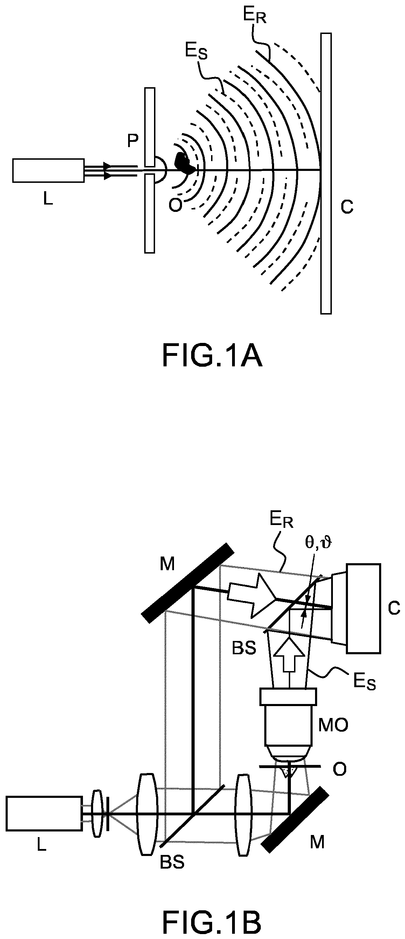

L'holographie numérique sur l'axe, développée sur la base des travaux de Gabor, et décrite par exemple dans l'article de J. Garcia-Sucerquia et al. (« Digital in-line holographie microscopy », Applied Optics, Vol. 45, N°5 (2006)) dont un schéma est reproduit sur la FIG. 1A, a donné lieu à des dispositifs d'imagerie particulièrement simples de mise en œuvre. Comme illustré sur la FIG. 1A, un faisceau lumineux émis par une source laser L est envoyé sur un trou P formant un point source. Une première onde sphérique émerge du point source P et illumine un objet d'étude O ; il en résulte une onde issue de l'objet, appelée onde signal et dont le champ électromagnétique est noté $E_S$. L'onde signal interfère avec une onde sphérique issue du point P, appelée onde de référence, dont le champ électromagnétique est noté $E_R$. L'acquisition du signal d'interférence par un détecteur bidimensionnel (plan de détection C) résulte en une figure d'interférence ou interférogramme I qui peut s'exprimer par l'équation (1) ci-dessous :

$$I = |E_S + E_R|^2 = |E_S|^2 + |E_R|^2 + E_S E_R{}^* + E_S{}^* E_R \qquad (1)$$

Ces systèmes, permettant à l'homme de l'art de créer des hologrammes de Gabor, sont cependant limités en sensibilité du fait de la superposition spatiale du signal utile $E_S E_R{}^*$ (où * représente la conjugaison complexe) avec les autres termes d'interférence dans l'interférogramme.

L'holographie numérique hors axe, dont un exemple de mise en œuvre est décrit par exemple dans l'article de P. Marquet et al. (« Digital holographie microsocopy : a noninvasive contrast imaging technique allowing quantitative visualization of living cells with subwavelength axial accuracy », Optics letters, vol. 30, N°5 (2005)) permet par rapport à l'holographie numérique sur l'axe, de gagner considérablement en sensibilité du fait de l'introduction d'un décalage de fréquences spatiales sur le terme interférométrique croisé de l'onde signal et de l'onde de référence (terme $E_S E_R{}^*$ dans l'équation (1)).

La FIG. 1B reproduit un schéma d'un dispositif de microscopie par holographie numérique hors axe tel que décrit dans l'article ci-dessus mentionné. Le dispositif comprend un interféromètre de Mach-Zehnder dans lequel des lames séparatrices BS et des miroirs M sont agencés pour former un bras de référence et un bras objet sur lequel est positionné l'objet d'étude O. Une source laser L éclaire l'interféromètre de Mach-Zehnder à une longueur d'onde λ donnée ; un objectif de microscope MO, agencé sur le bras objet, permet de sélectionner un champ de l'objet d'étude O. Les ondes signal et de référence, dont les champs électromagnétiques sont notés respectivement $E_S$ et $E_R$, interfèrent dans un plan de détection d'un détecteur bidimensionnel C. Dans ce montage, les ondes signal et de référence sont séparées angulairement et leurs directions de propagation font des angles $\theta \approx k_x/k$ et $\vartheta \approx k_y/k$, où $k_x$ et $k_y$ sont respectivement les projections du vecteur d'onde de l'onde de référence sur chacun des axes x et y d'un repère orthogonal défini dans un plan perpendiculaire à l'axe optique, et k est la norme dudit vecteur d'onde, donnée par $k = 2\pi/\lambda$ où λ désigne la longueur d'onde optique.

Dans ce cas, l'interférogramme I mesuré dans le plan de détection s'écrit :

$$I = |E_S + E_R \exp(i\,k_x\,x + i\,k_y\,y)|^2$$

Soit:

$$I = |E_S|^2 + |E_R|^2 + E_S E_R^* \exp(-i\,k_x\,x - i\,k_y\,y) + E_S^* E_R \exp(i\,k_x\,x + i\,k_y\,y) \qquad (2)$$

Comme cela apparaît dans l'équation (2), le terme d'interférence croisé $E_S E_R^*$ qui représente le signal utile se trouve maintenant séparé spatialement des termes d'auto modulation $|E_S|^2$ et $|E_R|^2$, ce qui permet de le détecter avec une bien meilleure sensibilité.

Le dispositif illustré sur la FIG. 1B présente cependant l'inconvénient d'être sensible à l'environnement de mesure ; en effet, de simples perturbations de l'air ambiant ou des vibrations peuvent perturber le faisceau de référence et donc la mesure.

La demande de brevet US 2017/0003650 décrit un dispositif de microscopie par holographie numérique hors axe dans une configuration autoréférencée dans laquelle l'onde de référence est formée par double passage dans un réseau de Bragg épais. L'onde de référence est ensuite superposée à l'onde signal au moyen de lames séparatrices et de miroirs, comme dans l'exemple de la FIG. 1B, pour interférer sur un détecteur bidimensionnel.

La présente description propose un dispositif et une méthode d'imagerie optique par holographie numérique hors axe permettant, par rapport aux technologies connues, à la fois une très grande simplicité de mise en œuvre, une très grande compacité et une excellente robustesse.

RESUME

Selon un premier aspect, la présente description concerne un dispositif d'imagerie optique d'un objet par holographie hors axe tel que selon la revendication indépendante 1. D'autres aspects de l'invention sont définis dans les revendications dépendantes.

Les déposants ont démontré que l'agencement original, dans un dispositif d'imagerie par holographie hors axe, d'un ensemble formé d'un ou plusieurs réseaux de Bragg pour former l'onde de référence et l'onde signal, permettait de garantir à la fois robustesse, compacité du dispositif et qualité de l'imagerie. En effet, l'onde de référence et l'onde signal ainsi formées interfèrent directement en sortie du ou des réseau(x) de Bragg, évitant ainsi que le dispositif soit soumis aux perturbations extérieures. Non seulement les réseaux de Bragg épais génèrent intrinsèquement un filtrage spatial passe-bas de l'onde défléchie (onde de référence), ce qui contribue à la très bonne qualité de l'hologramme reconstruit, mais en plus, l'agencement original proposé permet de former un dispositif d'imagerie holographique extrêmement compact. Les déposants ont montré qu'avec un tel agencement, la distance entre l'objet et le dispositif de détection (capteur) pouvait être réduite à moins de 10 centimètres, avantageusement inférieure à un centimètre, voire inférieure à quelques millimètres.

Selon un ou plusieurs exemples de réalisation, ledit ensemble d'un ou plusieurs réseau(x) de Bragg épais comprend au moins un premier réseau de Bragg épais à strates d'indice agencées selon une première direction, avec un premier pas donné et au moins un deuxième réseau de Bragg épais à strates d'indice agencées selon une deuxième direction, perpendiculaire à la première direction, avec un deuxième pas donné. Cet agencement permet d'obtenir une déflexion de l'onde de référence par rapport à l'onde signal non défléchie avec des angles de déflexion définis dans deux plans perpendiculaires.

Selon un ou plusieurs exemples de réalisation, ledit ensemble d'un ou plusieurs réseau(x) de Bragg épais comprend au moins un premier réseau de Bragg épais à strates d'indice multiplexées, présentant des strates d'indice agencées selon deux directions perpendiculaires, avec un pas donné dans chacune des directions. Cet agencement permet également d'obtenir une déflexion de l'onde de référence par rapport à l'onde signal non défléchie avec des angles de déflexion définis dans deux plans perpendiculaires.

Selon un ou plusieurs exemples de réalisation, ledit ensemble d'un ou plusieurs réseau(x) de Bragg épais comprend en outre un deuxième réseau de Bragg épais à strates d'indice multiplexées, présentant des strates d'indice agencées selon deux directions perpendiculaires, avec un pas donné dans chacune des directions, de telle sorte que l'angle de déflexion total de l'onde de référence défléchie, mesuré dans chacun desdits plans perpendiculaires, est égal à la différence des angles de déflexion introduits par chacun desdits réseaux de Bragg épais multiplexés.

L'association de deux réseaux de Bragg épais à strates d'indice multiplexées permet, pour des réseaux de Bragg épais d'épaisseur donnée, d'assurer une plus grande sélectivité angulaire de l'onde de référence défléchie.

Selon un ou plusieurs exemples de réalisation, le dispositif d'imagerie optique d'un objet par holographie hors axe comprend en outre un objectif de microscope pour former une image d'un champ restreint de l'objet OBJ avec un grandissement donné. Cet agencement permet une application du dispositif en microscopie par holographie hors axe.

Selon un deuxième aspect, la présente description concerne une méthode d'imagerie optique d'un objet par holographie hors axe tel que selon la revendication indépendante 6.

BREVE DESCRIPTION DES FIGURES

D'autres avantages et caractéristiques de l'invention apparaîtront à la lecture de la description, illustrée par les figures suivantes qui représentent :

- FIGS. 1A et 1B (déjà décrites), des schémas de dispositifs de microscopie respectivement par holographie sur l'axe et hors axe, selon l'art antérieur ;
- FIG. 2, un schéma d'un exemple de dispositif d'imagerie optique par holographie hors axe selon la présente description.
- FIGS. 3A à 3C, des schémas illustrant la propagation des faisceaux transmis et défléchis par des réseaux de Bragg épais, respectivement à strates d'indice dîtes « horizontales » (FIG. 3A), à strates d'indice dites « verticales » (FIG. 3B), et à strates d'indice dites « multiplexées » (FIG. 3C).
- FIGS. 4A et 4B, des séries d'images obtenues expérimentalement et montrant respectivement (FIG. 4A) l'intensité du champ électromagnétique des ondes transmises et défléchies par le réseau de Bragg, pour différentes conditions d'accord de Bragg et (FIG. 4B) des interférogrammes acquis par la caméra et des hologrammes reconstruits numériquement;
- FIGS. 5A et 5B, des schémas montrant des exemples de dispositif d'imagerie optique par holographie hors axe selon la présente description respectivement avec un objectif de microscope et avec une pupille de champ;
- FIG. 6, des schémas illustrant différents ensembles d'un ou plusieurs réseaux de Bragg épais, pour la mise en œuvre de la méthode d'holographie hors axe selon la présente description ;
- FIG.7, un schéma illustrant un agencement à deux réseaux de Bragg épais tels que le ou les angle(s) de déflexion résultant de la ou des déflexions successives soient de l'ordre du ou des angles de déflexion recherché(s) pour la mise en œuvre de l'imagerie holographique hors axe selon la présente description.

DESCRIPTION DETAILLEE

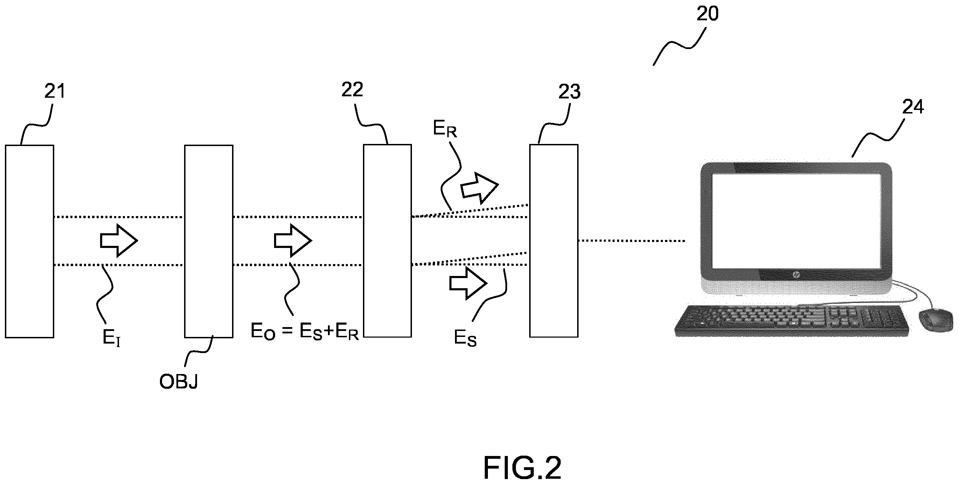

La FIG. 2 représente un schéma d'un exemple de dispositif d'imagerie 20 d'un objet OBJ selon la présente description. L'objet est par exemple un échantillon biologique, par exemple une culture de cellules vivantes, ou un matériau destiné à la microélectronique (semi-conducteur, verre, miroir).

Le dispositif d'imagerie 20 comprend une source lumineuse 21 adaptée pour l'émission d'une onde d'illumination de l'objet OBJ dont le champ électromagnétique est noté $E_I$. Bien que représentée en transmission sur la FIG. 2, l'illumination de l'objet peut se faire en réflexion, par exemple lorsque l'objet est un semi-conducteur, du verre, ou un miroir. La source lumineuse est par exemple un laser, une diode super luminescente (ou SLD selon l'abréviation de l'expression anglo-saxonne « Super- Luminescent Diode »), une diode électroluminescente (ou « LED » selon l'abréviation de l'expression anglo-saxonne « Light-Emitting Diode »).

Le dispositif d'imagerie 20 comprend par ailleurs un ensemble 22 d'un ou plusieurs réseau(x) de Bragg épais destiné à recevoir une onde en provenance de l'objet, de champ électromagnétique $E_O$. L'onde en provenance de l'objet comprend une première composante formée d'une onde issue de l'objet, ou onde signal, de champ électromagnétique et une deuxième composante formée d'une onde issue de la source et non perturbée par l'objet, dite onde de référence, de champ électromagnétique $E_R$. L'onde issue de l'objet est en pratique une onde résultant de la diffraction de l'onde d'illumination par l'ensemble des microstructures de l'objet, les microstructures pouvant résulter par exemple des inhomogénéités d'indice de réfraction dans un objet observé en transmission. Sous certaines conditions d'incidence de l'onde de référence, dites conditions d'accord de Bragg, l'onde de référence est défléchie par le réseau de Bragg épais 22 selon une direction donnée et filtrée spatialement du fait des propriétés intrinsèques des réseaux de Bragg épais. L'onde signal, émise par l'objet dans un cône angulaire défini par les caractéristiques opto-géométriques du dispositif d'imagerie, est toujours transmise sans être déviée du fait du non respect de l'accord de Bragg. L'onde de référence $E_R$ défléchie et filtrée par le réseau de Bragg épais 22 interfère donc avec l'onde signal transmise par le réseau de Bragg sans être défléchie. Il en résulte un signal d'interférence formé dans un plan de détection d'un dispositif de détection bidimensionnel 23 ; le dispositif de détection bidimensionnel permet ainsi l'acquisition d'un interférogramme résultant dudit signal d'interférence. Une unité de calcul 24 permet alors de déterminer, à partir dudit interférogramme, une répartition d'amplitude et de phase de l'onde signal dans le plan de l'objet.

Le dispositif d'imagerie est donc bien un dispositif d'holographie numérique hors axe dont les caractéristiques, notamment en terme de pas des franges du signal d'interférences, d'orientation des franges dans le plan du détecteur, de largeur du spectre angulaire de l'onde de référence, sont données par les caractéristiques du ou des réseau(x) de Bragg épais, comme cela est expliqué ci-dessous. La « reconstruction » de l'onde signal à partir de l'interférogramme comprend par exemple et de façon connue une transformation de Fresnel, et peut être faite de façon identique à celle effectuée dans les techniques connues d'holographie numérique hors axe.

Il est bien entendu possible de procéder à l'acquisition d'une série d'interférogrammes dans le cas par exemple où l'on souhaite faire une imagerie dynamique de l'objet (vidéo). Dans ce cas, une reconstruction de l'onde signal est effectuée pour chaque interférogramme.

Pour l'acquisition du ou des interférogrammes, le dispositif de détection bidimensionnel est par exemple un détecteur matriciel d'une caméra CCD (Charge-coupled device) ou CMOS (Complementary metal-oxide-semiconductor).

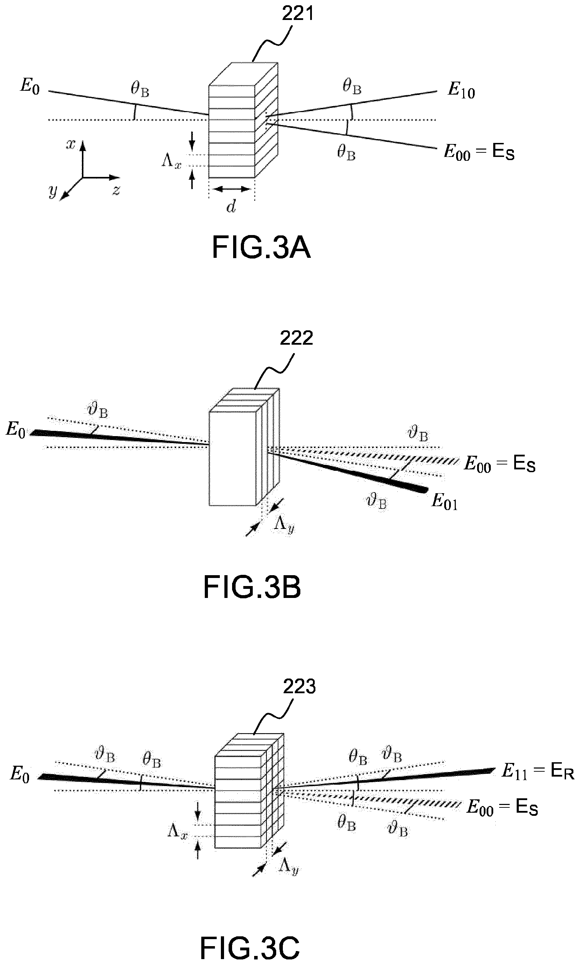

Les FIGS. 3A à 3C illustrent la propagation de l'onde de référence et de l'onde signal dans trois réseaux de Bragg épais, un réseau de Bragg épais 221 à strates d'indice dites « horizontales » de pas (ou période) $\Lambda_x$ (FIG. 3A), un réseau de Bragg épais 222 à strates d'indice dites « verticales » de pas $\Lambda_y$ (FIG. 3B) et un réseau de Bragg épais 223 à strates d'indice dites « multiplexées » avec des pas $\Lambda_x$ et $\Lambda_y$, respectivement (FIG. 3C).

Dans la présente description, on appelle réseau de Bragg épais à strates d'indice dites « horizontales » ou « verticales » un réseau de Bragg épais à modulation d'indice dans une seule direction privilégiée, permettant de définir un ensemble de strates d'indice parallèle entre elles. Les termes « horizontal » et « vertical » sont employés de façon arbitraire et signifient simplement dans la présente description que les deux ensembles de strates des deux réseaux de Bragg respectifs sont perpendiculaires. On appelle réseau de Bragg épais à strates d'indice dites « multiplexées » un réseau de Bragg épais à modulation d'indice s'étendant dans deux directions privilégiées, permettant de former deux ensembles de strates multiplexées s'étendant selon deux directions perpendiculaires.

Selon un exemple, l'indice de réfraction n(x,y) dans un réseau de Bragg peut s'écrire, selon chacune des directions x et y perpendiculaires entre elles :

$$n(x,y) = n_0 + n_x \sin\left(2\pi x/\Lambda_x\right) + n_y \sin\left(2\pi y/\Lambda_y\right) \qquad (3)$$

Où $n_0$ est l'indice moyen, $\Lambda_x$ et $\Lambda_y$ les pas (ou périodes) des modulations d'indice de réfraction suivant les deux directions perpendiculaires x et y respectivement et $n_x$ et $n_y$ les amplitudes des modulations d'indice de réfraction suivant les deux directions perpendiculaires x et y respectivement.

En pratique, pour l'obtention d'une image à deux dimensions de l'objet, on pourra utiliser, selon un premier exemple, un réseau de Bragg épais à strates d'indice multiplexées ou l'on pourra utiliser, selon un deuxième exemple, deux réseaux de Bragg épais agencés l'un derrière l'autre, présentant des strates d'indice perpendiculaires entre elles. Cela permet dans les deux exemples, de définir une direction de l'onde défléchie par rapport à l'onde signal par deux angles définis dans des plans perpendiculaires entre eux.

Ainsi, dans un exemple de deux réseaux successifs à strates d'indice « horizontales » et « verticales », on pourra définir, pour le premier réseau de Bragg à strates d'indice « horizontales » (FIG. 3A) un angle $\theta_B$ de la direction d'une onde incidente $E_O$ par rapport au plan des strates du réseau dans un plan perpendiculaire au plan des strates et contenant la direction du vecteur d'onde de l'onde incidente. On pourra définir, pour le deuxième réseau de Bragg à strates d'indice « verticales » (FIG. 3B) un angle $\vartheta_B$ de la direction d'une onde incidente $E_O$ par rapport au plan des strates du réseau dans un plan perpendiculaire au plan des strates et contenant la direction du vecteur d'onde de l'onde incidente.

Par ailleurs, dans un exemple de réseau de Bragg épais à strates d'indice multiplexées (FIG. 3C), on pourra définir les angles $(\theta_B, \vartheta_B)$ de la direction d'une onde incidente par rapport aux plans des strates d'indice d'un réseau de Bragg épais à strates d'indice multiplexées, dans deux plans perpendiculaires entre eux et contenant respectivement la direction du vecteur d'onde de l'onde incidente et la normale aux strates d'indice.

En pratique, on pourra travailler avec des réseaux de Bragg épais présentant des strates d'indice caractérisées par un angle d'inclinaison $\Phi$ par rapport à une direction normale à la face d'entrée du réseau. Cela permet de faciliter le montage du ou des réseau(x) de Bragg dans le dispositif en travaillant avec une onde incidente toujours normale à la face d'entrée du réseau tout en respectant le ou les accords de Bragg.

Dans le premier comme dans le deuxième exemple, une déflexion de l'onde de référence par rapport à la direction de propagation de l'onde signal pourra se produire sous réserve que les angles $(\theta_B, \vartheta_B)$ vérifient les conditions d'accord de Bragg du ou des réseau(x), telles que décrites par exemple dans Kogelnik et al. ("Coupled wave theory for thick hologram gratings." Bell Labs Technical Journal 48, no. 9 (1969): 2909-2947) et rappelées ci-dessous en référence aux FIGS. 3A - 3C.

Sur les FIGS. 3A à 3C, on note $E_O$ le champ électromagnétique de l'onde en provenance de l'objet, composée de l'onde de référence et de l'onde signal. Le champ électromagnétique de l'onde signal, transmise par le réseau sans déviation, est noté $E_{00}$ (ou $E_S$). Comme illustré sur la FIG. 3A, dans les conditions d'accord de Bragg, l'onde de référence incidente sur le réseau à strates «horizontales » 221 avec un angle $\theta_B$ est défléchie dans un plan « vertical » de $2\theta_B$, le plan « vertical » étant défini comme le plan perpendiculaire au plan des strates du réseau à strates « horizontales », et contenant la direction du vecteur d'onde de l'onde incidente; on note $E_{10}$ le champ électromagnétique de l'onde défléchie. Par ailleurs, comme illustré sur la FIG. 3B, toujours dans les conditions d'accord de Bragg, l'onde de référence incidente sur le réseau à strates « verticales » 222 avec un angle $\vartheta_B$ est défléchie dans un plan « horizontal » de $2\vartheta_B$, le plan « horizontal » étant défini comme le plan perpendiculaire au plan des strates du réseau à strates « verticales » et contenant la direction du vecteur d'onde de l'onde incidente; on note $E_{01}$ le champ électromagnétique de l'onde défléchie. Dans le cas d'un réseau de Bragg épais 223 à strates d'indice « multiplexées » (FIG. 3C), l'onde de référence incidente avec les angles $(\theta_B, \vartheta_B)$ est défléchie de $2\theta_B$ et de $2\vartheta_B$ respectivement; on note $E_{11}$ le champ électromagnétique de l'onde défléchie.

Les angles de Bragg $\theta_B$ et $\vartheta_B$ satisfont de façon connue les relations :

$$2\sin(\theta_B) = \lambda/\Lambda_x \qquad (4)$$

$$2\sin(\vartheta_B) = \lambda/\Lambda_y \qquad (5)$$

Ou, dans l'approximation des petits angles :

$$2\theta_B \approx \lambda/\Lambda_x \qquad (4')$$

$$2\vartheta_B \approx \lambda/\Lambda_y \qquad (5')$$

Il est ainsi possible, pour une longueur d'onde $\lambda$ donnée de l'onde d'illumination de l'objet, de choisir les pas (ou périodes) $\Lambda_x$ et $\Lambda_y$ des modulations d'indice de réfraction suivant deux directions perpendiculaires entre elles (strates « horizontales » et « verticales ») respectivement, afin de déterminer l'angle $(2\theta_B, 2\vartheta_B)$ formé entre l'onde de référence et l'onde signal.

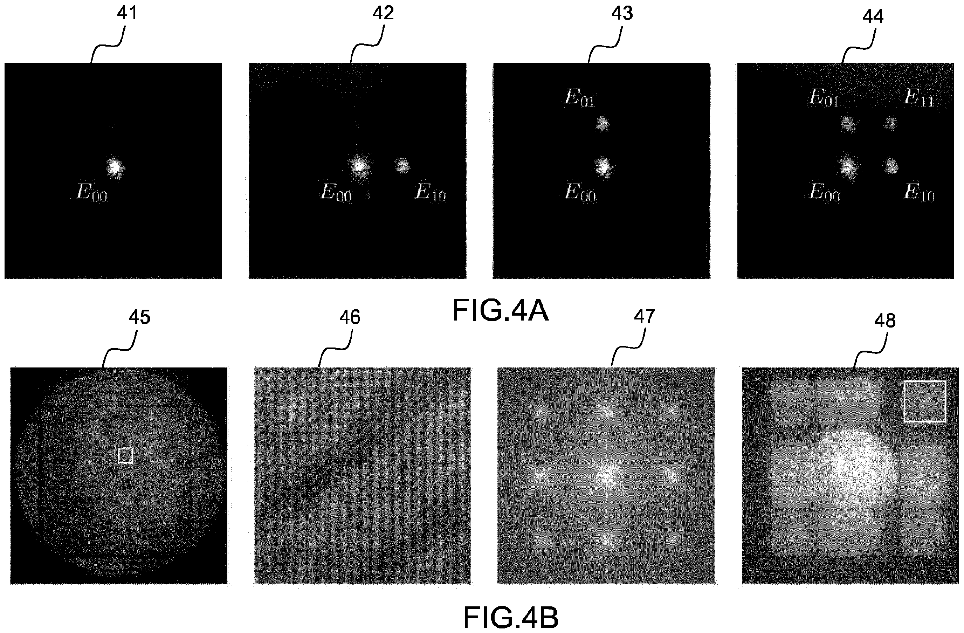

Les quatre champs électromagnétiques $E_{00}$, $E_{10}$, $E_{01}$, et $E_{11}$ correspondent à des faisceaux de lumière détectables par un détecteur matriciel agencé en aval du ou des réseau(x) de Bragg, comme cela est illustré sur la FIG. 4A.

Plus précisément, la FIG. 4A représente des résultats expérimentaux de déflexion d'une onde incidente sur un ensemble formé de deux réseaux de Bragg épais agencés l'un derrière l'autre ; un premier réseau de Bragg épais à strates d'indice « horizontales » (tel qu'illustré sur la FIG. 3A) et un deuxième réseau de Bragg épais à strates d'indice « verticales » (tel qu'illustré sur la FIG. 3B). Chacun des réseaux est caractérisé par un indice de réfraction moyen ($n_0$ = 1.5), un pas de la modulation de l'indice de réfraction (respectivement $\Lambda_x$ = 18.9 $\mu$m, $\Lambda_y$ = 18.3 $\mu$m), une épaisseur (respectivement $d_x$, $d_y$ = 8.9 mm) du réseau, une profondeur de modulation de l'indice de réfraction (respectivement $n_x$, $n_y$ = 1.4 $10^{-5}$), un angle d'inclinaison (respectivement $\Phi_x$, $\Phi_y$ = 90°) des strates d'indice par rapport à la face d'entrée du réseau.

L'onde incidente est une onde provenant d'un objet (une mire) éclairé en transmission au moyen d'une source laser émettant à $\lambda$ = 660 nm. Une caméra comprenant 2048 x 2048 détecteurs élémentaires (ou pixels) permet l'acquisition des images. Les images 41 - 44 représentées sur la FIG. 4A sont obtenues avec un faisceau incident collimaté d'environ 1 mm de diamètre, en modifiant l'inclinaison des réseaux de Bragg épais. L'image 41 de la FIG. 4A correspond à un cas où la condition de Bragg n'est satisfaite pour aucun des deux réseaux. Seul le faisceau non défléchi $E_{00}$ (onde signal issu de l'objet) est transmis. L'image 42 de la FIG. 4A correspond à un cas où la condition de Bragg n'est satisfaite que pour le réseau à strates « horizontales ». Le faisceau non défléchi $E_{00}$ (onde signal issu de l'objet) et le faisceau $E_{10}$ défléchi de $2\theta_B$ dans un plan « vertical » sont transmis par le réseau. L'image 43 de la FIG. 4A correspond à un cas où la condition de Bragg n'est satisfaite que pour le réseau à strates verticales. Le faisceau non défléchi $E_{00}$ (onde signal issu de l'objet) et le faisceau $E_{01}$ défléchi de $2\vartheta_B$ dans un plan « horizontal » sont transmis par le réseau. L'image 44 de la FIG. 4A correspond à un cas où la condition de Bragg est satisfaite pour le réseau à strates horizontales et pour le réseau à strates verticales. Le faisceau non défléchi $E_{00}$ (onde signal issu de l'objet), le faisceau $E_{10}$ défléchi de $2\theta_B$ dans un plan « vertical », le faisceau $E_{01}$ défléchi de $2\vartheta_B$ dans un plan « horizontal », sont transmis par le réseau. Un quatrième faisceau $E_{11}$, défléchi de $2\theta_B$ dans un plan « vertical » et de $2\vartheta_B$ dans un plan « horizontal » est transmis.

La FIG. 4B représente un interférogramme obtenu expérimentalement (images 45, 46), une transformée de Fourier (image 47) calculée à partir dudit interférogramme et un hologramme (image 48) reconstruit à partir de la transformée de Fourier calculée. L'interférogramme représenté sur l'image 45 résulte des interférences entre les faisceaux transmis par les réseaux de Bragg respectivement à strates d'indice « horizontales » et « verticales » (conditions expérimentales identiques à celles décrites pour la FIG. 4A), lorsque les conditions de Bragg sont satisfaites pour les deux réseaux (conditions correspondant à l'image 44 de la FIG. 4A), mais pour un faisceau incident de plus grand diamètre, environ 11 mm, éclairant tout l'objet. Les quatre ondes de champs électromagnétiques respectifs $E_{00}$, $E_{10}$, $E_{01}$, et $E_{11}$ interfèrent dans la zone de recouvrement des faisceaux respectifs pour former l'interférogramme illustré sur l'image 45. L'image 46 est un agrandissement de la zone délimitée par un carré blanc sur l'image 45.

Le champ total $E_t$ est ainsi la somme des quatre champs transmis :

$$E_t = E_{00} + E_{10}\, e^{\wedge}\{\, i\, k_x\, x\} + E_{01}\, e^{\wedge}\{\, i\, k_y\, y\} + E_{11}\, e^{\wedge}\{\, i\, k_x\, x +\ i\, k_y\, y\} \qquad (6)$$

Où:

$$k_x = 4\,\pi\,\theta_B\,/\,\lambda \qquad (7)$$

$$k_y =\ 4\,\pi\,\vartheta_B\,/\,\lambda \qquad (8)$$

L'interférogramme est donné par l'intensité du champ total :

$$I = |E_t|^{\wedge}2 \qquad (9)$$

Le terme d'interférence croisé $E_{00}\, E_{11}^{*}$ de l'interférogramme ainsi calculé représente le signal utile pour la reconstruction de l'hologramme.

L'image 47 correspond à l'amplitude de la transformée de Fourier spatiale de l'interférogramme représenté sur l'image 45. La composante utile de ce signal, correspondant terme d'interférence croisé $E_{00}\, E_{11}^{*}$, apparait dans le coin en haut à droite sur l'amplitude calculée de la transformée de Fourier spatiale de l'interférogramme, représentée sur l'image 47 de la FIG.4B.

L'image 48 est l'hologramme calculé dans le plan de l'objet par une transformée de Fresnel discrète de l'interférogramme ; une méthode de calcul est décrite par exemple dans l'article de N. Verrier et al. ("Off-axis digital hologram reconstruction: some practical considérations." Applied optics 50, no. 34 (2011): H136-H146). La région de l'hologramme dans le coin en haut à droite de l'image 48 correspond à l'amplitude de la transformée de Fresnel discrète du terme d'interférence croisé $E_{00}\, E_{11}^{*}$ calculée dans le plan de l'objet. La phase de cet hologramme correspond à la différence de phase entre le champ $E_{00}$ et le champ $E_{11}$ calculée dans le plan de l'objet.

En pratique, pour la mise en œuvre de la méthode d'holographie numérique hors axe selon la présente description, le choix des pas $\Lambda_x$ et $\Lambda_y$ des strates horizontales et verticales pourra être fait en prenant en compte les règles d'échantillonnage dictées par le théorème de Nyquist-Shannon. Les angles de déflection $2\theta_B$ et $2\vartheta_B$ entre les ondes de champ électromagnétique $E_{11}$ (onde de référence défléchie) et $E_{00}$ (onde signal transmise) satisfont avantageusement les conditions $2\theta_B \in [-\theta_S/2,\ \theta_S/2]$ et $2\vartheta_B \in [-\vartheta_S/2,\ \vartheta_S/2]$, avec :

$$2\theta_S \approx \lambda/d_x \qquad (10)$$

$$2\vartheta_S \approx \lambda/d_y \qquad (11)$$

Où $\theta_S$ et $\vartheta_S$ sont appelés angles d'acceptance de la détection cohérente, et $d_x$ et $d_y$ respectivement les pas entre les détecteurs élémentaires (ou « pixels ») du détecteur bidimensionnel, selon les directions x et y, respectivement.

Les déposants ont montré que l'utilisation de réseaux de Bragg épais pour la formation des ondes signal et de référence dans un montage d'holographie numérique hors axe, présente une très grande robustesse, notamment du fait que l'onde de référence est formée à partir de l'onde objet. Ainsi, la phase de l'hologramme correspond rigoureusement à la différence de phase entre le champ $E_{00}$ et le champ $E_{11}$ calculée dans le plan de l'objet. Autrement dit, les fluctuations de phase pouvant être présents dans les montages d'interférométrie à bras séparés sont ici évitées.

Par ailleurs, il est remarquable de noter qu'un réseau de Bragg épais génère un filtrage spatial de l'onde défléchie, ce qui contribue à former une onde de référence filtrée passe-bas angulairement et par conséquent, un hologramme de très bonne qualité.

Plus précisément, la largeur angulaire des faisceaux défléchis par des réseaux de Bragg épais, respectivement à strates d'indice « horizontales » (FIG. 3A) et à strates d'indice « verticales » (FIG. 3B), d'indice moyen $n_0$ et d'épaisseur d, sont respectivement $\Delta\theta_1$ et $\Delta\vartheta_1$, avec (voir Kogelnik *et al.* précédemment cité, ainsi que Ciapurin et al. "Modeling of phase volume diffractive gratings, part 1: transmitting sinusoidal uniform gratings." Optical Engineering 45, no. 1 (2006): 015802-015802.):

$$\Delta\theta_1 \approx n_0\,\Lambda_x/d \qquad (12)$$

$$\Delta\vartheta_1 \approx n_0 \, \Lambda_y/d \qquad (13)$$

L'épaisseur d d'un réseau de Bragg est définie par l'épaisseur destinée à être traversée par l'onde incidente. Dans un réseau de Bragg épais destiné à travailler à incidence normale par rapport à la face d'entrée du réseau (strates d'indice inclinées d'an angle F par rapport à une direction normale à la face d'entrée du réseau), l'épaisseur d du réseau de Bragg épais pourra simplement être la distance entre les faces d'entrée et de sortie.

Ainsi par exemple, pour une épaisseur de chaque réseau de Bragg épais $d \approx 9$ mm, un indice moyen $n_0 \approx 1,5$ (indice moyen du verre) et des valeurs de pas $\Lambda_x \approx 18,9 \; \mu$m et $\Lambda_y \approx 18,3 \; \mu$m, on obtient $\Delta\theta_1 = \Delta\vartheta_1 \approx 3,3$ mrad, ce qui est équivalent, dans un interféromètre de type « point diffraction interferometer » tel que décrit dans la référence Smartt, R. N. et al. ("Point-Diffraction Interferometer". Journal of the Optical Society of America. 62: 737 (1972)) au filtrage par une pupille de diamètre 330 $\mu$m, placée au foyer d'une lentille de focale 10 cm.

Il est donc possible d'adapter les pas des strates d'indice $\Lambda_x$ et $\Lambda_y$ et l'épaisseur de réseau d en fonction de la largeur angulaire $(\Delta\theta_1, \Delta\vartheta_1)$ recherchée pour l'onde de référence défléchie.

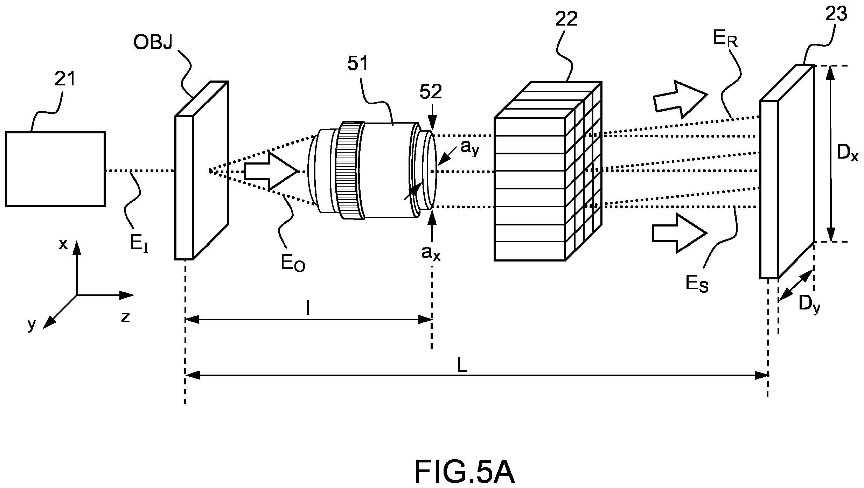

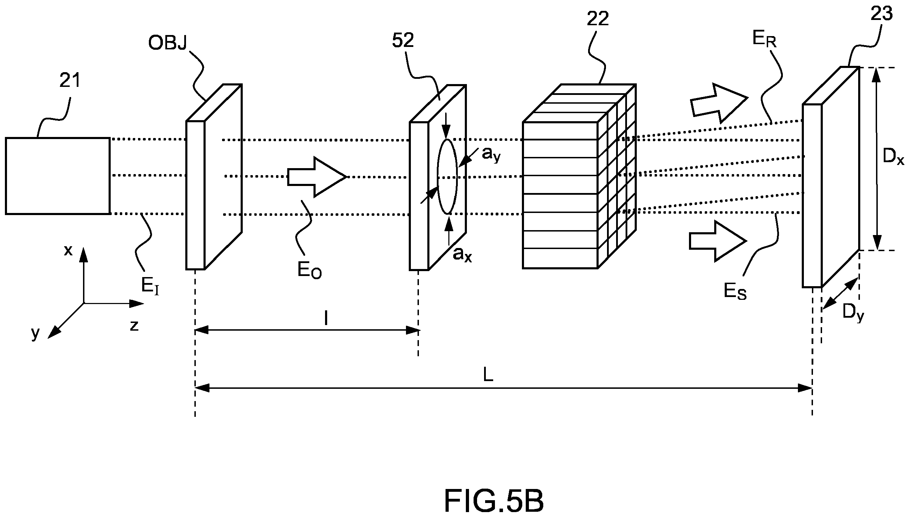

Les FIGS. 5A et 5B illustrent deux exemples de réalisation, avec et sans objectif de microscope, d'un dispositif d'holographie numérique hors axe selon la présente description.

Dans chacun de ces exemples, le dispositif d'holographie numérique hors axe comprend comme dans l'exemple de la FIG. 2, une source lumineuse 21 adaptée pour l'émission d'une onde d'illumination d'un objet OBJ, un ensemble 22 d'un ou plusieurs réseau(x) de Bragg épais, un détecteur bidimensionnel 23. Bien que représentée en transmission sur la FIG. 2, l'illumination de l'objet peut se faire en réflexion.

Dans l'exemple de la FIG. 5A, un objectif de microscope 51 permet de former une image d'un champ restreint de l'objet OBJ avec un grandissement donné. La méthode mise en œuvre au moyen du dispositif devient alors une méthode de microscopie optique par holographie numérique hors axe. En pratique, l'objectif de microscope est agencé de façon à renvoyer l'image de l'objet à l'infini, c'est-à-dire que l'objet est placé à la distance de travail d'un objectif dit « infini-foyer ». L'objectif de microscope 51 est défini par une ouverture numérique NA limitant en pratique les bandes passantes angulaires $\Delta\theta_0$ et $\Delta\vartheta_0$ de l'onde en provenance de l'objet. L'objectif de microscope forme un diaphragme de champ 52 qui étend et borne la bande passante angulaire de l'onde de champ $E_O$ en provenance de l'objet par rapport à une détection sans objectif. Plus précisément, la bande passante angulaire $(\Delta\theta_0, \Delta\vartheta_0)$ de l'onde en provenance de l'objet est définie par :

$$\Delta\theta_0 = \Delta\vartheta_0 = 2 \, \text{arcsin(NA)} \qquad (14)$$

La FIG. 5B illustre un autre exemple dans lequel il n'y a pas d'objectif de microscope. La limitation de la bande passante angulaire de l'onde de champ $E_O$ en provenance de l'objet est faite par les dimensions $D_x$, $D_y$ en l'absence d'un diaphragme de champ, ou par les dimensions $a_x$, $a_y$ d'un diaphragme de champ agencé au sein du dispositif, comme c'est le cas sur la FIG. 5B.

Dans le premier cas, la bande passante angulaire $(\Delta\theta_0, \Delta\vartheta_0)$ de l'onde en provenance de l'objet est défini par

$$\Delta\theta_0 \approx D_x/\,L \qquad (15)$$

$$\Delta\vartheta_0 \approx D_y/L \qquad (16)$$

Où $D_x$ et $D_y$ sont les dimensions du champ image défini par le détecteur, respectivement selon les axes x, y et L est la distance entre le plan de l'objet et le détecteur.

Dans le deuxième cas, la bande passante angulaire $(\Delta\theta_0, \Delta\vartheta_0)$ de l'onde en provenance de l'objet est définie par

$$\Delta\theta_0 \approx a_x/\,\lambda \qquad (17)$$

$$\Delta\vartheta_0 \approx a_y/\,\lambda \qquad (18)$$

Où $a_x$ et $a_y$ sont les dimensions du diaphragme de champ 52, respectivement selon les axes x, y et $\lambda$ est la distance entre le plan de l'objet et le diaphragme de champ.

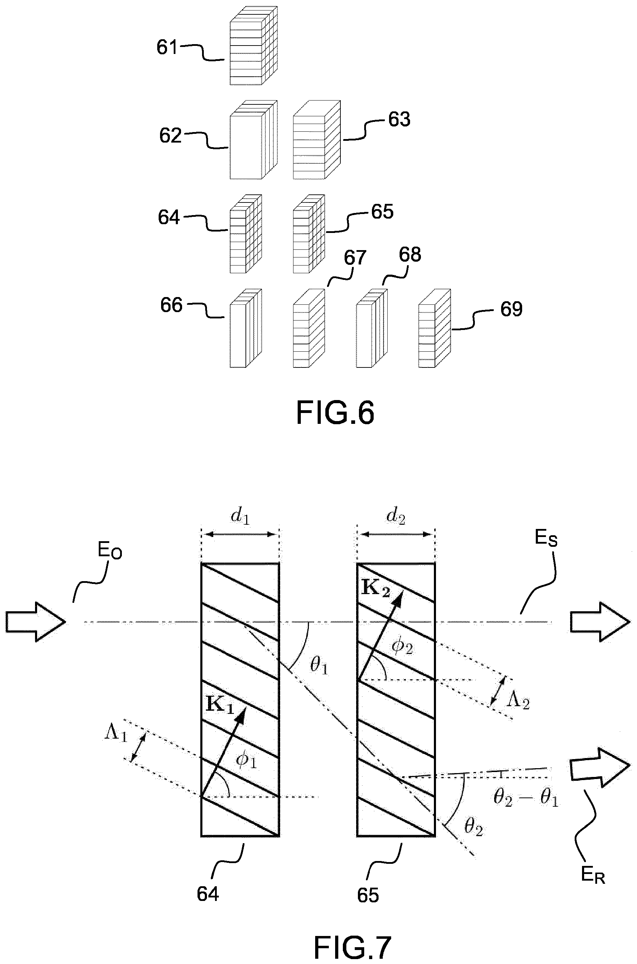

En pratique, comme décrit précédemment, on pourra utiliser pour la mise en œuvre de la méthode d'holographie hors axe selon la présente description et illustré sur la FIG. 6, un réseau de Bragg épais à strates d'indice multiplexées 61, ou un agencement de deux réseaux de Bragg 62, 63, respectivement à strates d'indice horizontales et à strates d'indice verticales.

Comme cela sera décrit en relation avec la FIG. 7, il pourra également être avantageux de dédoubler chacun des réseaux pour obtenir un ensemble de deux réseaux de Bragg épais à strates d'indice multiplexées 64, 65 ou un ensemble de quatre réseaux de Bragg 66, 67, 68, 69 respectivement à strates d'indice horizontales et à strates d'indice verticale. Les configurations à réseaux dédoublés présentent l'avantage de permettre d'augmenter le pouvoir de filtrage spatial pour une épaisseur totale fixée de réseau de Bragg, par rapport à une configuration à réseau(x) non dédoublé(s).

De tels réseaux de Bragg épais peuvent être fabriqués de façon connue, par exemple par insolation sous lumière ultraviolette d'un matériau de type verre dopé photo-thermo-réfractif, tel que décrit dans l'article suivant Efimov et al. ("High-efficiency Bragg gratings in photothermorefractive glass." Applied Optics 38, no. 4 (1999): 619-627).

La FIG.7 présente en particulier une configuration possible selon laquelle deux réseaux de Bragg épais à strates d'indice multiplexées 64, 65 agencés l'un derrière l'autre sont employés. Leurs périodes $\Lambda_1$ et $\Lambda_2$, et orientations des strates de phase $\Phi_1$ et $\Phi_2$, sont telles que l'angle de déflexion total θ2 - θ1 est l'angle de l'onde de référence souhaité. Autrement dit, dans la configuration à réseaux dédoublés, les angles de déflexion de l'onde de référence par rapport à l'onde objet sont la somme algébrique des angles de déflection de chaque réseau.

Cette configuration présente l'avantage d'assurer une plus grande sélectivité angulaire ($\Delta\theta_1$, $\Delta\vartheta_1$) de l'onde $E_{11}$, pour des épaisseurs de réseaux données. En effet, dans un réseau de Bragg épais unique, la recherche de petits angles de déflexion entre l'onde de référence et l'onde objet se traduit par des pas des strates d'indice important (voir équations (3) et (4). Pour bénéficier d'un bon pouvoir de filtrage de l'onde de référence (équations (12), (13)), il est alors nécessaire d'augmenter l'épaisseur d du réseau, ce qui n'est pas souhaitable au-delà d'une certaine limite. La configuration à réseaux de Bragg dédoublés permet de travailler avec des réseaux qui restent de faible épaisseur.

Par exemple, deux réseaux successifs de périodes $\Lambda_1$ = 1.5 microns et $\Lambda_2$ = 1.9 microns de 2.25 mm d'épaisseur chacun, d'angles d'orientation des strates $\Phi_1 \approx \Phi_2 \approx 80$ degrés, permettent une sélectivité angulaire de l'ordre de $\Delta\theta_0 \approx 1$ mrad, et un angle de déflection entre l'onde de référence et l'onde objet d'environ 1.5 degrés. Pour obtenir une sélectivité angulaire de l'ordre de $\Delta\theta_0 \approx 1$ mrad et un angle de déflection entre l'onde de référence et l'onde objet d'environ 1.5 degrés avec un seul réseau, sa période doit valoir environ 20 microns et son épaisseur doit être d'environ 30 mm. La distance entre l'objet et le détecteur dans un dispositif tel qu'illustré sur la FIG. 7 peut ainsi être inférieure au centimètre.

Bien que la FIG. 7 présente une configuration avec deux réseaux de Bragg épais multiplexés, il était tout à fait possible de l'appliquer à des réseaux de Bragg épais à strates horizontales ou verticales, auquel cas on pourra avoir un ensemble de quatre réseaux de Bragg épais (réseaux 66 - 69, FIG. 6).

## Revendications

**1.** Dispositif d'imagerie optique (20) d'un objet (OBJ) par holographie hors axe comprenant :

- une source lumineuse (21) pour l'émission d'une onde d'illumination ($E_I$) de l'objet, en transmission ou en réflexion;
- un ensemble formé d'un réseau ou de plusieurs réseaux de Bragg épais (22) arrangé de manière à recevoir une onde (Eo) en provenance de l'objet illuminé et à défléchir par accord de Bragg une première composante ($E_R$) non perturbée par l'objet de ladite onde ($E_O$) en provenance de l'objet, dite onde de référence, et à laisser passer sans déflexion, du fait du non-respect de l'accord de Bragg, une deuxième composante (Es) de ladite onde ($E_O$) en provenance de l'objet, dite onde signal, de telle sorte que l'onde de référence défléchie présente par rapport à l'onde signal non défléchie des angles de déflexion prédéterminés ($2\theta_B$, $2\vartheta_B$) définis dans deux plans perpendiculaires,
- un dispositif de détection bidimensionnel (23) configuré pour l'acquisition d'un interférogramme résultant de l'interférence entre ladite onde de référence défléchie et ladite onde signal non défléchie, le dispositif de détection bidimensionnel étant agencé directement en sortie dudit ensemble formé d'un réseau ou de plusieurs réseaux de Bragg épais de telle sorte que ladite onde de référence et ladite onde signal ne sont pas déviées angulairement entre ledit ensemble et le dispositif de détection bidimensionnel; et
- une unité de calcul (24) pour déterminer, à partir dudit interférogramme, une répartition d'amplitude et de phase de l'onde signal dans le plan de l'objet.

**2.** Dispositif d'imagerie optique selon la revendication 1, dans lequel ledit ensemble formé d'un réseau ou de plusieurs réseaux de Bragg épais comprend au moins un premier réseau de Bragg épais à strates d'indice multiplexées, présentant des strates d'indice agencées selon deux directions perpendiculaires, avec un pas donné ($\Lambda_{1x}$, $\Lambda_{1y}$) dans chacune des directions.

**3.** Dispositif d'imagerie optique selon la revendication 2, dans lequel ledit ensemble est formé de plusieurs réseaux de Bragg épais et comprend en outre un deuxième réseau de Bragg épais à strates d'indice multiplexées, présentant des strates d'indice agencées selon deux directions perpendiculaires, avec un pas donné ($\Lambda_{2x}$, $\Lambda_{2y}$) dans chacune des directions, de telle sorte que l'angle de déflexion de l'onde de référence défléchie, mesuré dans chacun desdits plans perpendiculaires, est égal à la différence des angles de déflexion introduits par chacun desdits réseaux de Bragg épais multiplexés.

**4.** Dispositif d'imagerie optique selon la revendication 1, dans lequel ledit ensemble est formé de plusieurs réseaux de Bragg épais et comprend au moins un premier réseau de Bragg épais à strates d'indice agencées selon une première direction, avec un premier pas donné ($\Lambda_x$) et au moins un deuxième réseau de Bragg épais à strates d'indice agencées selon une deuxième direction, perpendiculaire à la première direction, avec un deuxième pas donné ($\Lambda_y$).

**5.** Dispositif d'imagerie optique selon l'une quelconque des revendications précédentes, comprenant en outre un objectif de microscope pour former une image d'un champ restreint de l'objet OBJ avec un grandissement donné.

**6.** Méthode d'imagerie optique d'un objet par holographie hors axe comprenant :

- l'illumination de l'objet en transmission ou en réflexion au moyen d'une onde d'illumination ($E_I$) issue d'une source lumineuse (21);
- l'envoi sur un ensemble formé d'un réseau ou de plusieurs réseaux de Bragg épais (22) d'une onde (Eo) en provenance de l'objet illuminé;
- la déflexion par accord de Bragg d'une première composante non perturbée par l'objet de ladite onde ($E_O$) en provenance de l'objet, dite onde de référence ($E_R$), tandis qu'une deuxième composante de l'onde en provenance de l'objet, dite onde signal (Es), du fait du non-respect de l'accord de Bragg, traverse ledit ensemble formé d'un réseau ou de plusieurs réseaux de Bragg sans être défléchie, l'onde de référence défléchie présentant par rapport à l'onde signal non défléchie des angles de déflexion prédéterminés ($2\theta_B$, $2\vartheta_B$) définis dans deux plans perpendiculaires,
- l'acquisition, au moyen d'un dispositif de détection bidimensionnel (23) d'un interférogramme résultant de l'interférence entre ladite onde de référence défléchie et ladite onde signal, le dispositif de détection bidimensionnel étant agencé directement en sortie dudit ensemble formé d'un réseau ou de plusieurs réseaux de Bragg épais de telle sorte que ladite onde de référence et ladite onde signal ne sont pas déviées angulairement entre ledit ensemble et le dispositif de détection bidimensionnel; et

le calcul, à partir dudit interférogramme, d'une répartition d'amplitude et de phase de l'onde signal dans le plan de l'objet.

**Patentansprüche**

**1.** Optische Abbildungsvorrichtung (20) zur Abbildung eines Objekts (OBJ) durch Off-Axis-Holographie, aufweisend:

- eine Lichtquelle (21) zum Aussenden einer Lichtwelle (EI) zur Beleuchtung des Objekts, transmittierend oder reflektierend;
- eine aus einem oder mehreren dickwandigen Bragg-Spiegeln (22) gebildete Anordnung, die so angeordnet ist, dass sie eine von dem beleuchteten Objekt kommende Welle (Eo) empfängt und eine erste, nicht durch das Objekt beeinflusste Komponente ($E_R$) der von dem Objekt kommenden Welle ($E_O$), die als Referenzwelle bezeichnet wird, durch Bragg-Abstimmung ablenkt und eine zweite Komponente (Es) der Welle (Eo) vom Objekt, die sogenannte Signalwelle, aufgrund der Nichteinhaltung der Bragg-Abstimmung, ohne Ablenkung durchqueren lässt, so dass die abgelenkte Referenzwelle in Bezug auf die nicht abgelenkte Signalwelle vorbestimmte Ablenkungswinkel ($2\theta_B$, $2\vartheta_B$) aufweist, die in zwei senkrecht zueinander stehenden Ebenen definiert sind,
- eine zweidimensionale Detektionseinrichtung (23), die so konfiguriert ist, dass sie ein Interferogramm erfasst, das aus der Interferenz zwischen der abgelenkten Referenzwelle und der nicht abgelenkten Signalwelle resultiert, wobei die zweidimensionale Detektionseinrichtung direkt am Ausgang der Anordnung aus einem oder mehreren dickwandigen Bragg-Spiegeln angeordnet ist, so dass die Referenzwelle und die Signalwelle zwischen der Anordnung und der zweidimensionalen Detektionseinrichtung nicht winkelmäßig abgelenkt werden; und
- eine Recheneinheit (24), um aus dem Interferogramm eine Amplituden- und Phasenverteilung der Signalwelle in der Ebene des Objekts zu bestimmen.

**2.** Optische Abbildungsvorrichtung nach Anspruch 1, wobei die Anordnung aus einem oder mehreren dickwandigen Bragg-Spiegeln besteht, die mindestens einen ersten dickwandigen Bragg-Spiegel mit multiplizierten Indexschichten aufweist, wobei die Indexschichten in zwei senkrechten Richtungen mit einer gegebenen Teilung ($\Lambda_{1x}$, $\Lambda_{1y}$) in jeder der Richtungen angeordnet sind.

**3.** Optische Abbildungsvorrichtung nach Anspruch 2, wobei die Anordnung aus mehreren dickwandigen Bragg-Spiegeln gebildet ist und ferner einen zweiten dickwandigen Bragg-Spiegel mit multiplizierten Indexschichten aufweist, wobei die Indexschichten in zwei senkrechten Richtungen zueinander angeordnet sind, mit einer vorbestimmten Teilung ($\Lambda_{2x}$, $\Lambda_{2y}$) in jeder der Richtungen, so dass der Ablenkungswinkel der abgelenkten Referenzwelle, gemessen in jeder der senkrechten Ebenen, gleich der Differenz der durch jeden der multiplizierten dickwandigen Bragg-Spiegel verursachten Ablenkungswinkel ist.

**4.** Optische Abbildungsvorrichtung nach Anspruch 1, wobei die Anordnung aus mehreren dickwandigen Bragg-Spiegeln gebildet ist und mindestens einen ersten dickwandigen Bragg-Spiegel mit Indexschichten, die in einer ersten Richtung angeordnet sind, mit einer ersten gegebenen Schrittweite ($\Lambda_x$) und mindestens einen zweiten dickwandigen Bragg-Spiegel mit Indexschichten, die in einer zweiten Richtung, die senkrecht zu der ersten Richtung ist, mit einer zweiten gegebenen Schrittweite ($\Lambda_y$) angeordnet sind, aufweist.

**5.** Optische Abbildungsvorrichtung nach einem der vorhergehenden Ansprüche, die ferner ein Mikroskopobjektiv aufweist, um ein Bild eines begrenzten Feldes des Objekts (OBJ) mit einer vorgegebenen Vergrößerung zu erzeugen.

**6.** Verfahren zur optischen Abbildung eines Objekts durch Off-Axis-Holographie, das folgende Schritte aufweist:

- Beleuchtung des Objekts mittels Transmission oder Reflexion durch eine Beleuchtungswelle ($E_I$), die von einer Lichtquelle (21) ausgesendet wird;
- Senden einer Welle ($E_O$), die von dem beleuchteten Objekt kommt, auf eine Anordnung, die aus einem oder mehreren dickwandigen Bragg-Spiegeln (22) gebildet wird;
- Ablenkung durch Bragg-Abstimmung einer ersten, nicht durch das Objekt gestörten Komponente der vom Objekt kommenden Welle ($E_O$), der sogenannten Referenzwelle ($E_R$), während eine zweite Komponente der vom Objekt kommenden Welle, die sogenannte Signalwelle ($E_S$), aufgrund der Nichteinhaltung der Bragg-Abstimmung, die aus einem oder mehreren Bragg-Spiegeln gebildete Anordnung durchquert, ohne abgelenkt zu werden, wobei die abgelenkte Referenzwelle in Bezug auf die nicht abgelenkte Signalwelle vorbestimmte Ablenkungswinkel ($2\theta_B$, $2\vartheta_B$) aufweist, die in zwei senkrecht zueinander stehenden Ebenen definiert sind,
- Erfassen eines aus der Interferenz zwischen der abgelenkten Referenzwelle und der Signalwelle resultierenden Interferogramms mittels einer zweidimensionalen Detektorvorrichtung (23), wobei die zweidimensionale Detektorvorrichtung direkt am Ausgang der aus einem oder mehreren dickwandigen Bragg-Spiegeln gebildeten Anordnung angeordnet ist, so dass die Referenzwelle und die Signalwelle zwischen der Anordnung und der zweidimensionalen Detektorvorrichtung nicht winkelmäßig abgelenkt werden; und

Berechnen einer Amplituden- und Phasenverteilung der Signalwelle in der Ebene des Objekts aus dem Interferogramm.

**Claims**

**1.** An optical imaging device (20) of an object (OBJ) by off-axis holography comprising:

- a light source (21) for emitting an illumination wave ($E_I$) on the object, in transmission or reflection;
- an assembly formed of one thick Bragg grating or a plurality of thick Bragg gratings (22) arranged to receive a wave (Eo) coming from the illuminated object and to deflect by compliance to the Bragg's law a first component ($E_R$) undisturbed by the object of said wave ($E_O$) coming from the object, referred to as reference wave, and to let pass without deflection, because of the non-compliance to the Bragg's law, a second component ($E_S$) of said wave ($E_O$) coming from the object, called the signal wave, so that the deflected reference wave presents predetermined deflection angles ($2\theta_B$, $2\vartheta_B$) defined in two perpendicular planes with respect to the non-deflected signal wave,
- a two-dimensional detection device (23) configured for the acquisition of an interferogram resulting from the interference between said deflected reference wave and said non-deflected signal wave, the two-dimensional detection device being arranged directly at the output of said assembly formed of one thick Bragg grating or a plurality of thick Bragg gratings such that said reference wave and said signal wave are not angularly deviated between said assembly and the two-dimensional detection device; and
- a computing unit (24) for determining, from said interferogram, an amplitude and phase distribution of the signal wave in the plane of the object.

2. The optical imaging device according to claim 1, wherein said assembly formed of one thick Bragg grating or a plurality of thick Bragg gratings comprises at least one first thick Bragg grating with multiplexed index strata, having index strata arranged in two perpendicular directions, with a given pitch ($\Lambda 1_x$, $\Lambda 1_y$) in each of the directions.

3. The optical imaging device according to claim 2, wherein said assembly is formed of a plurality of thick Bragg gratings and further comprises a second thick Bragg grating with multiplexed index strata, having index strata arranged in two perpendicular directions, with a given pitch ($\Lambda 2_x$, $\Lambda 2_y$) in each direction, such that the deflection angle of the deflected reference wave, measured in each of said perpendicular planes, is equal to the difference in the deflection angles introduced by each of said multiplexed thick Bragg gratings.

4. The optical imaging device according to claim 1, wherein said assembly is formed of a plurality of thick Bragg gratings and comprises at least one first thick Bragg grating with index strata arranged in a first direction, with a first given pitch ($\Lambda_x$) and at least one second thick Bragg grating with index strata arranged in a second direction, perpendicular to the first direction, with a second given pitch ($\Lambda_y$).

5. The optical imaging device according to any of the above claims, further comprising a microscope lens for forming an image of a limited field of the object (OBJ) with a given magnification.

6. A method for optical imaging of an object by off-axis holography comprising:

- the illumination of the object in transmission or reflection by means of an illumination wave ($E_I$) coming from a light source (21);
- the sending on an assembly formed of one thick Bragg grating or a plurality of thick Bragg gratings (22) of a wave (Eo) coming from the illuminated object;
- the deflection by compliance to the Bragg's law of a first component not disturbed by the object of said wave ($E_O$) coming from the object, called the reference wave ($E_R$), while a second component of the wave coming from the object, called the signal wave ($E_S$), due to non-compliance with the Bragg's law, passes through said assembly formed of one Bragg grating or a plurality of Bragg gratings without being deflected, the deflected reference wave having predetermined deflection angles ($2\theta_B$, $2\vartheta_B$) defined in two perpendicular planes relative to the non-deflected signal wave,
- the acquisition by means of a two-dimensional detection device (23) of an interferogram resulting from the interference between said deflected reference wave and said signal wave, the two-dimensional detection device being arranged directly at the output of said assembly formed of one thick Bragg grating or a plurality of thick Bragg gratings such that said reference wave and said signal wave are not angularly deviated between said assembly and the two-dimensional detection device; and

the calculation, from said interferogram, of an amplitude and phase distribution of the signal wave in the plane of the object.

FIG.1A

FIG.1B

FIG.2

FIG.3A

FIG.3B

FIG.3C

FIG.4A

FIG.4B

FIG.5A

EP 3 602 201 B1

FIG.5B

EP 3 602 201 B1

**FIG.6**

**FIG.7**

## RÉFÉRENCES CITÉES DANS LA DESCRIPTION

**Documents brevets cités dans la description**

- US 20170003650 A

**Littérature non-brevet citée dans la description**

- **J. GARCIA-SUCERQUIA et al.** Digital in-line holographie microscopy. *Applied Optics,* 2006, vol. 45 (5
- **P. MARQUET et al.** Digital holographie microsocopy : a noninvasive contrast imaging technique allowing quantitative visualization of living cells with subwavelength axial accuracy. *Optics letters,* 2005, vol. 30 (5
- **KOGELNIK et al.** Coupled wave theory for thick hologram gratings. *Bell Labs Technical Journal,* 1969, vol. 48 (9), 2909-2947

- **N. VERRIER et al.** Off-axis digital hologram reconstruction: some practical considérations. *Applied optics,* 2011, vol. 50 (34), H136-H146
- **CIAPURIN et al.** Modeling of phase volume diffractive gratings, part 1: transmitting sinusoidal uniform gratings. *Optical Engineering,* 2006, vol. 45 (1), 015802-015802
- **SMARTT, R. N. et al.** Point-Diffraction Interferometer. *Journal of the Optical Society of America,* 1972, vol. 62, 737
- **EFIMOV et al.** High-efficiency Bragg gratings in photothermorefractive glass. *Applied Optics,* 1999, vol. 38 (4), 619-627